# EUROPEAN PATENT SPECIFICATION

(11) **EP 0 881 030 B1**
(45) Date of publication and mention of the grant of the patent: **25.09.2002**
(21) Application number: 97202253.7
(22) Date of filing: 18.07.1997
(51) Int. Cl.: B23Q 3/08, F04D 19/04

(54) **A process for milling the rotor of a turbomolecular pump**
Verfahren zum Fräsen des Rotors einer Turbomolekularpumpe
Procédé de fraisage du rotor d'une pompe turbomoléculaire

(30) Priority: 28.05.1997 IT TO970454
(43) Date of publication of application: 02.12.1998
(73) Proprietor: VARIAN S.p.A., I-10040 Leini (Torino) (IT)
(72) Inventor: Marzio, Marco, 10135 Turin (IT); Pellizzari, Paolo, 10090 Gassino T.SE (Turin) (IT); Inserra, Dario, 10093 Collegno (Turin) (IT)
(74) Representative: Robba, Pierpaolo

(56) References cited:
- FR-A- 2 661 631
- GB-A- 2 052 317
- GB-A- 2 181 374
- US-A- 3 623 826
- PATENT ABSTRACTS OF JAPAN vol. 009, no. 209 (M-407), 27 August 1985 -& JP 60 071138 A (AISHIN SEIKI KK), 23 April 1985,
- PATENT ABSTRACTS OF JAPAN vol. 008, no. 210, 26 September 1984 -& JP 59 099001 A (TOSHIBA ), 7 June 1984,

## Description

The present invention refers to a process for milling rotors of turbomolecular pumps in which the rotor portion to be milled is embedded into a resin. The milling process is particularly adapted for milling the monolithic rotors of turbomolecular pumps made of aluminum alloys.

As it is well known, a turbomolecular pump schematically comprises an outer casing housing the gas pumping stages which stages comprise stator rings cooperating with rotor disks fastened to a rotatable shaft driven by the pump motor.

The rotor disks can be either flat disks or disks provided with tilted and closely spaced blades, usually obtained through milling operations, and with blades that are or can be different for each stage in respect of their number, length, thickness and inclination angle.

It is further known that considerable vibrations are imparted to each single blade when these latter are subjected to the final machining through milling and this considerably limit the milling speed.

Even when machining the blades at limited speeds, the milling cutter still leaves remarkable burrs on the machined parts that depends on the speed of said milling tool.

It is an object of the present invention to eliminate the above mentioned inconveniences through a process that allows:
- a dramatic reduction of the vibrations imparted to each single blade during the milling, thus improving the surface finish of said blades;
- an increase of both the cutting speed and the cutting depth, with a consequent appreciable reduction of the contact time with the tools;
- an appreciable reduction of the noise generated in the working environment.

The above scope is accomplished through the process for milling the rotors of a turbomolecular pump comprising the following steps:
providing a monolithic rotor with disks obtained by turning;
introducing a predetermined amount of resin into a mold substantially formed as a cylindrical container having an inner diameter sligthly larger than the diameter of the disks of the rotor;
preheating the container with the resin in a furnace until the resin melts;
preheathing the turned rotor to 80-100°C and inserting it into the mold;
bringing the assembly again into a furnace and heating it until the resin is uniformely distributed between the disks;
removing the mold from the furnace and letting the rotor cool at room temperature until the resin solidifies;
removing the rotor from the mold and
milling the disks to obtain the blades;
eliminating the residual resin between the blades by returning the milled rotor into the furnace at a temperature of 80-100°C;
deburring the blades.

The resin has a melting point low enough to render easy its application/removal, but high enough to prevent it from melting during the cutting process; moreover the resin has good clinging or ahesion properties to the piece to prevent its detachment from the piece under the most severe conditions. Additionally the resin must not leave residuals on the piece that would be incompatible with the vacuum operating conditions of the pump and must not generate toxic vapours and be easily disposed.

The invention will be disclosed with particular reference to the attached drawings that are only exemplary and not limiting. In the drawings:

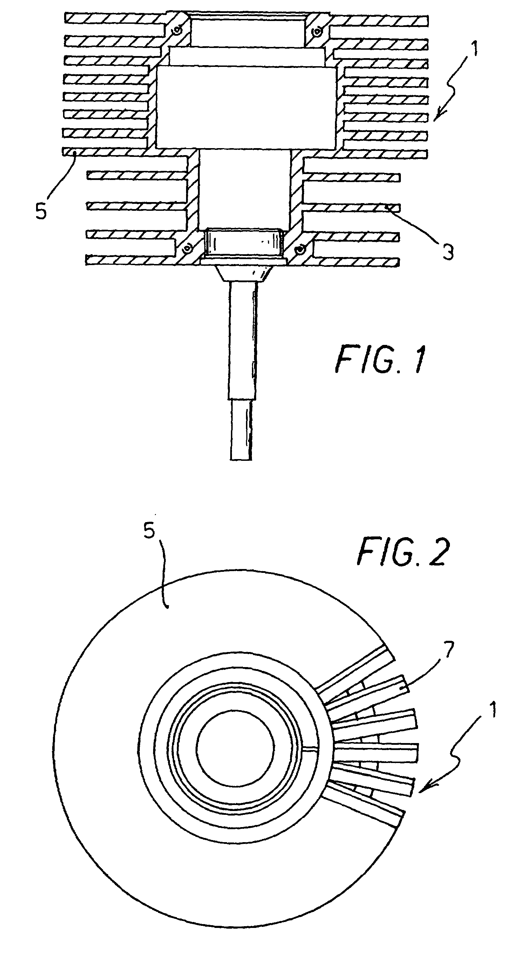

Figure 1 is an elevation view of a longitudinal cross section of the rotor of a turbomolecular pump;
Figure 2 is a plane view of the rotor of Fig. 1;
Figure 3 is a scrap perspective view of the rotor of a turbomolecular pump;
Figure 4 is a block diagram illustrating the sequence of the process steps.

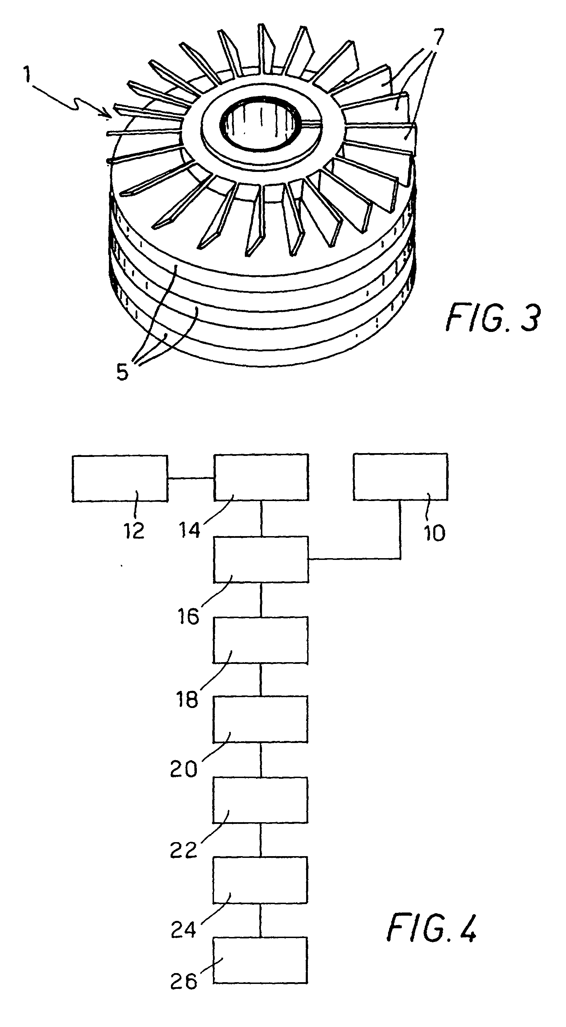

Referring to the Figures, for carrying out the process of the invention one starts with a monolithic rotor 1 provided with disks 3 and 5 obtained by turning; as indicated by step 10 in the block diagram of Fig. 4.

A predetermined amount of resin is then inserted into a suitable mold, substantially formed as a cylindrical container (not shown in the drawings) having an inner diameter sligthly larger than the diameter of the upper (larger) disks 5 of the rotor 1; step 12.

The container with the resin is preheated in a furnace (not shown) until the resin melts (at about 100°C); step 14.

The turned rotor 1 is preheathed to 80-100°C and inserted into the mold; step 16.

The assembly is brought again into a furnace and heated until the resin is uniformely distributed between the disks; step 18.

The mold is removed from the furnace and the rotor is let to cool at room temperature until the resin solidifies; step 20.

Then the rotor is removed from the mold and the disks 3 and 5 are finally milled to form the blades 7 thereon; step 22.

After the blades have been milled, the residual resin remaining between the blades 7 is removed by introducing again the milled rotor into the furnace at a temperature of 80-100°C, so as to melt and remove the remaining resin; step 24.

Then the blades are deburred for the final finish; step 26.

A satisfactory type of resin, only mentioned for exemplary purpose, is paraffin with a melting temperature of 55-65°C, a washing temperature of 65°C and a freezing point of about 55°C.

Thanks to the process of the invention, the block of the rotor with the disks to be milled becomes a single block with the paraffin solidified over and between the disks, so that when these latter are milled to form the blades in practice no vibration is generated in the disks, which allows for a quicker and more precise milling of the blades

## Claims

1. A process for milling the rotors of a turbomolecular pump comprising the following steps:
providing a monolithic rotor (1) having disks (3, 5) obtained by turning;
introducing a predetermined amount of resin into a mold substantially formed as a cylindrical container having an inner diameter sligthly larger than the diameter of said disks (3, 5) of the rotor (1);
preheating said container with the resin in a furnace until the resin melts;
preheathing the turned rotor (1) to 80-100°C and inserting it into the mold;
bringing the assembly again into a furnace and heating it until the resin is uniformely distributed between the disks;
removing the mold from the furnace and letting the rotor cool at room temperature until the resin solidifies;
removing the rotor (1) from the mold and milling the disks (3, 5) to obtain the blades (7);
eliminating the residual resin between the blades (7) by returning the milled rotor into the furnace at a temperature of 80-100°C;
deburring the blades (7).

2. A process for milling the rotors of a turbomolecular pumps as claimed in claim 1, **characterized in that** said resin is paraffin with a melting temperature of 55-65°C and a freezing point of about 55°C and, the washing temperature is 65°C.

## Patentansprüche

1. Verfahren zum Fräsen der Rotoren einer Turbomolekularpumpe, umfassend die folgenden Schritte:
Bereitstellen eines monolithischen Rotors (1) mit Scheiben (3, 5), die man durch Drehen erhalten hat;
Einbringen einer vorbestimmten Harzmenge in eine Form, die im Wesentlichen als zylindrischer Behälter ausgebildet ist, mit einem Innendurchmesser, der geringfügig größer ist als der Durchmesser der Scheiben (3, 5) des Rotors (1);
Vorwärmen des Behälters mit dem Harz in einem Ofen, bis das Harz schmilzt;
Vorwärmen des gedrehten Rotors (1) auf 80-100°C und Einbringen desselben in die Form;
Wiederverbringen der Einheit in einen Ofen und Erwärmen derselben, bis das Harz gleichförmig zwischen den Scheiben verteilt ist;
Entfernen der Form aus dem Ofen und Abkühlenlassen des Rotors bei Raumtemperatur, bis sich das Harz verfestigt;
Entfernen des Rotors (1) aus der Form und Fräsen der Scheiben (3, 5), um die Blätter (7) zu erhalten;
Beseitigen des restlichen Harzes zwischen den Blättern (7) durch Zurückbringen des gefrästen Rotors in den Ofen mit einer Temperatur von 80-100°C;
Entgraten der Blätter (7).

2. Verfahren zum Fräsen der Rotoren einer Turbomolekularpumpe nach Anspruch 1, **dadurch gekennzeichnet, dass** das Harz Paraffin mit einer Schmelztemperatur von 55-65°C und einem Erstarrungspunkt von etwa 55°C ist, und die Reinigungstemperatur 65°C beträgt.

## Revendications

1. Procédé de fraisage des rotors d'une pompe turbomoléculaire comprenant les étapes suivantes consistant à :
se munir d'un rotor monolithique (1) portant des disques (3, 5) obtenus par usinage au tour ;
introduire une quantité prédéterminée de résine dans un moule essentiellement sous forme d'un récipient cylindrique ayant un diamètre intérieur légèrement plus grand que le diamètre desdits disques (3, 5) du rotor (1) ;
préchauffer ledit récipient avec la résine dans un four jusqu'à ce que la résine fonde ;
préchauffer le rotor usiné au tour (1) à une température de 80 à 100°C et l'insérer dans le moule ;
placer de nouveau l'assemblage dans un four et le chauffer jusqu'à ce que la résine soit uniformément répartie entre les disques ;
retirer le moule du four et laisser le rotor refroidir à la température ambiante jusqu'à ce que la résine se solidifie ;
retirer le rotor (1) du moule et fraiser les disques (3, 5) pour obtenir les lames (7) ;
éliminer la résine résiduelle entre les lames (7) en remettant le rotor fraisé dans le four à une température de 80 à 100°C ;
ébarber les lames (7).

2. Procédé de fraisage des rotors d'une pompe turbomoléculaire selon la revendication 1, **caractérisé en ce que** ladite résine est une paraffine ayant une température de fusion de 55 à 65°C, un point de congélation d'environ 55°C et la température de lavage est de 65°C.
